# EUROPEAN PATENT APPLICATION

(11) **EP 0 787 630 A1**
(43) Date of publication of application: **06.08.1997**
(21) Application number: 97300623.2
(22) Date of filing: 30.01.1997
(51) Int. Cl.: B60R 21/26

(54) **Hybrid adaptive driver side inflator**

(30) Priority: 30.01.1996 US 594101
(71) Applicant: MORTON INTERNATIONAL, INC., Chicago, Illinois 60606 (US)
(72) Inventor: Dahl, Kim V., Clinton, Utah 84015 (US)
(74) Representative: Johnstone, Douglas Ian

(57) **Abstract**

Hybrid variable output airbag inflator (10) includes a cylindrical housing enclosing a first chamber (26) containing compressed gas in which first and second subchambers (32, 34) are situated which contain heating material which is selectively ignitable by squibs (36). A gas impermeable member (52) faced with a filter (54) confronts subchamber vent ports (44) which are sealed by frangible burst discs (46). Heated gas leaving the subchambers (32, 34) is constrained to change direction a plurality of times before leaving the housing *via* an exit port (48) which is closed by a main burst disc (50). The member (52) may be connected by an annular apertured skirt (56) to a dome (20) separating the first chamber (26) from the subchambers (32, 34). The second subchamber (34) may be defined by an annular shield wall (30) situated inside the dome (20).

## Description

The present invention relates in general to hybrid airbag inflators. In particular, the present invention relates to an improved adaptive hybrid inflator, especially suited for use to protect a vehicle driver.

Airbag passive restraint systems include an inflator, which produces gas to inflate a cushion. The cushion is then compressed by the occupant to dampen the forces of a collision. Various types of inflators are known, generally classed as pyrotechnic, hybrid, and fluid fueled. Each class of inflator operates on a slightly different principle to produce the inflation gas, and these different principles result in differing operating characteristics. For example, of the three types of inflators noted, hybrid inflators typically result in a faster reduction in gas pressure within the cushion. For certain types of conditions, this is preferable, and as such hybrid inflators are preferred for certain applications.

There has also been a trend toward adaptive airbag systems in contemporary designs. Adaptive airbag systems are those which do not simply inflate a cushion upon collision, but tailor the response of the system based upon various factors. These factors can include the ambient temperature (which often affects the amount of gas an inflator produces), the severity of the collision, the position of the passenger in the seat, etc. For example, an adaptive airbag system could sense whether the collision is moderate or serious. Based upon this, the inflator would produce a smaller amount of inflation gas for a moderate collision, to cause the cushion to be "softer". However, if the collision is serious, the inflator would produce a greater amount of gas for a "harder" cushion needed to absorb the greater collision forces.

Beyond adaptive systems, the entire airbag field also has a constant desire to reduce size, weight, material costs, part production costs, and assembly costs. For inflators, the use of aluminum helps to reduce weight, and possibly cost. Additionally, the use of impact extrusion has been known to reduce part production costs. Further, to secure the metal inflator components together it is known that inertia welding, where two metal items are pressed together while spinning in opposite directions, can provide cost savings over conventional welding techniques such as arc and laser welding.

An object of the present invention is to provide an airbag inflator which reliably produces inflation gas to inflate a cushion and thus protect the passenger.

Another object of the invention is to provide such an inflator which is adaptive, and may produce a moderate or large amount of inflation gas.

A further object of the present invention is to provide such an inflator which is in the class of hybrid inflators.

Yet another object of the present invention is to provide such an inflator which is of sufficiently small size to be mounted to a steering wheel for driver side protection.

Yet another object is to provide such an inflator which is efficient, light weight, and inexpensive.

These and other objects are achieved by a hybrid adaptive inflator, suitable for use on the driver side. The inflator includes a disk-shaped housing. Within the housing there is a first chamber for housing a stored gas charge. The housing also includes two subchambers. Both subchambers include an initiator and a heating charge. One or both of the initiators may be fired, at various time delays, to vary the amount of gas produced according to the severity of the collision. The first chamber containing the stored gas includes a filter and various obstacles to force the hot gas from the subchamber(s) to fully mix with the cool stored gas.

The objects and features of the invention noted above are explained in more detail with reference to the drawings, in which like reference numerals denote like elements, and in which:

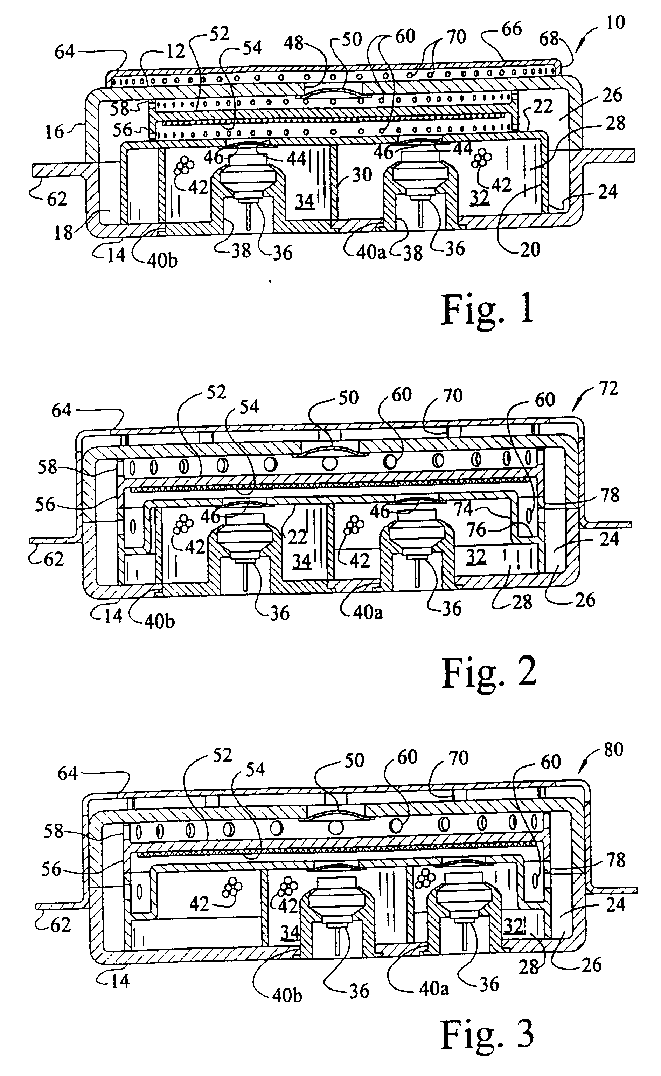

Figs. 1-5 are cross-sectional side views of inflators according to first through fifth embodiments, respectively, of the present invention.

With reference to Fig. 1, a first embodiment of an inflator according to the present invention is generally designated by reference numeral 10. As shown, the inflator 10 is of a size and shape commonly used for mounting to a steering wheel to protect the driver of the vehicle (not shown). As such, the inflator takes the general form of a disk, with a housing having a circular top wall 12, a circular bottom wall 14 spaced from the top wall, and a cylindrical side wall 16 extending between the peripheral edges of the top and bottom walls. These walls are preferably formed of impact extruded aluminum, although other materials and methods of forming may be employed.

The walls 12-16 define an interior 18 in which the various materials for producing the inflation gas are stored. Within the interior 18 there is mounted a separation dome 20. The dome 20 includes a circular upper wall 22, located between the top and bottom walls 12 and 14 of the housing, and a cylindrical edge wall 24 extending downward from the peripheral edge of the upper wall 22. The diameter of the upper wall is less than that of the top and bottom walls, and as such the edge wall 24 is spaced radially inward from the side wall 16, as will be discussed more fully below. The lower ends of the edge wall 24 are fixed to the bottom wall 14 in a gas-tight manner, preferably by welding, and most preferably by inertia welding.

The separation dome 20 divides the interior 18 of the inflator into first and second chambers 26 and 28, with the first chamber being outside the dome, and the second chamber being within the dome. In the first chamber there will be a stored inert gas, such as argon, which is used in inflating the cushion. As is known in the art, however, simply venting a stored gas into a cushion provides poor results. To avoid this, hybrid inflators, as a general class, provide a charge which is ignited to heat the stored gas. In the present invention, this charge is located within the second chamber. Furthermore, since the present invention provides an adaptive inflator, two separate charges are stored in the second chamber.

Specifically, within the second chamber there is mounted a shield wall 30. The shield wall is cylindrical, and extends between the upper wall 22 of the dome and the bottom wall 14 of the housing. The upper and lower ends of the shield wall form a gas-tight seal with the upper wall 22 and bottom wall 14, respectively, preferably by welding. As such, the shield wall divides the second chamber 28 into a first subchamber 32 and a second subchamber 34. The first subchamber is located between the dome and the exterior of the shield wall 30, and the second subchamber is located within the shield wall periphery between the upper and bottom walls 22 and 14.

Each of these subchambers is provided with an initiator, or squib, 36. The initiators for the first and second subchambers are secured to holders 38 which are received in mounting holes 40a and 40b, respectively, which extend through the bottom wall. Each initiator has an electrical connector at its lower end for connection to a controller (not shown) which sends signals to deploy the inflator. Upon receipt of the signal(s), the initiator(s) create a brief flash of heat.

Further, each of these subchambers is provided with a mass of heating material 42. The material 42 (which may be two or more different materials, such as igniter and generant), when subjected to the brief flash of heat from the initiator, produces additional heat, and may also produce an appreciable amount of gas. The production of heat is, however, typically most important.

During assembly of the inflator, a certain amount of air or other gas will be incidentally sealed within the first and second subchambers at atmospheric pressure. When subjected to the heat from the heating material 42, the pressure of this gas rises. This pressure increase would be augmented by the addition of any gas produced by the heating material during its ignition. This hot, high pressure gas is thus initially retained within the first, or first and second, subchamber.

To permit the gas to exit, each subchamber is provided with a vent port 44. Each vent port takes the form of a through hole in the upper wall 22 of the dome 20. These holes are formed at locations opening onto the first and second subchambers, as shown. However, for best results, and as is generally known in the art, it is preferable to seal these vent ports until a desired pressure is reached in the subchamber(s). To this end, each of the vent ports 44 is initially sealed with a burst disk 46.

The disks 46 are formed such that they will fail when subjected to a predetermined pressure. As such, when the pressure within the associated subchamber reaches the predetermined pressure, the burst disk(s) 46 will rupture, and the hot, high pressure gas will flow from the subchamber(s) to the first chamber 26 in the longitudinal direction. It is noted that the burst disks and other components are formed such that activation of the initiator 36 for one subchamber will not cause sufficient pressure to burst the disk for the other subchamber.

As noted above, an inert gas is stored in the first chamber under pressure. The hot, high pressure gas from the subchamber(s) will thus mix with this stored gas, resulting in the stored gas reaching a much higher temperature than prior to rupture of the disk(s) 46 (but somewhat cooler than the temperature of the unmixed gas from the subchamber). This higher temperature will, in turn, greatly increase the pressure of the stored gas. This pressure increase is sufficient to provide proper inflation for the airbag cushion.

To permit the (now hot) stored gas to flow from the inflator to the cushion, the top wall 12 of the housing is provided with an exit port 48, in the form of a through hole in the top wall. As with the vent ports, it is preferable to maintain the heated stored gas in the inflator until a predetermined pressure is reached. As such, the exit port 48 is provided with a main burst disk 50. As with the previous burst disks, the main disk will fail upon the internal pressure reaching a predetermined pressure. When this internal pressure is reached, the disk fails, and the hot stored gas flows from the inflator.

The above description is all that is strictly required for the hybrid, adaptive inflator according to the present invention. This structural arrangement will permit the selective inflation of a cushion to best protect a passenger based upon the various factors noted above. For example, if the first subchamber contains 70% of the inflator's heating material, and the second subchamber contains the remaining 30%, the controller would activate the initiator for only the first subchamber during a moderate collision. This would produce moderately hot, and therefore moderately pressurized, gas for inflating the cushion to a "soft" pressure.

Alternatively, the controller would provide a signal to activate both initiators in the case of a severe collision, thus providing hotter, and thus higher pressure, gas to the cushion. This would cause a "harder", or more pressurized, cushion required to protect the passenger. Even when both initiators are fired, this firing may be simultaneous, or with varying time delay to create the desired pressure over time in the cushion. The above example of 70% and 30% is of course only an example, and other percentage combinations may be achieved by varying the size of the shield wall with respect to the dome.

While this structural arrangement is sufficient for use as described above, there are various details and alternative arrangements which improve the performance of the inflator.

For example, the heating material, or rupturing burst disks, may produce some particulate material which will be entrained in the gas travelling to the cushion. This could injure the passenger. To reduce this possibility, the inflator 10 may be provided with a backstop 52 in spaced, opposed relation to the vent ports. Mounted upon the face of the backstop which is opposed to the vent ports is at least one filter 54. As may be envisioned, much if not all of the gas rushing from the subchamber(s) will impinge against the backstop, and thus pass through the filter 54, before continuing onward. As such, the filter 54 may be used to remove unwanted particulate material from the gas.

In order to maintain the filter in the desired position, the backstop 52 must of course be secured within the inflator. This may be achieved in a number of ways. As a first example (not shown), the backstop may be formed as a disk having its outer periphery secured, such as by welding, to the inner face of the side wall 16. Appropriate vent holes (not shown) could be provided about the periphery of such a disk, between the edge of the filter and the side wall, to permit the gas to pass through the disk toward the exit port. While this is possible, it would be difficult to maintain such a backstop in the desired position during the welding operation, and such a welding operation would typically be conventional, rather than inertia, welding.

To avoid this drawback, and to provide a more economical welding operation, the backstop may be formed as a disk, but with a diameter less than that of the inner face of the side wall 16, such that the peripheral edge of the disk is spaced from the side wall, as shown. To secure the backstop in position, there is provided either, or both, of a lower skirt 56 or upper skirt 58. Each of the lower and upper skirts take the form of a cylinder extending from the peripheral edge of the backstop. The lower skirt 56 would have a length to extend from the backstop to the upper face of the separation dome 20. The lower skirt 56 would of course have a diameter sufficient to encompass both of the vent ports 44 in the dome to ensure that the hot gas reaches the filter 54.

In a similar manner, the upper skirt 58 would extend from the backstop to the inner face of the top wall 12. In each case, the skirts 56 and 58 would be provided with a plurality of passages 60 through which the gas could flow to make its way from the second chamber to the exit port. In the embodiment shown, the backstop is provided with both the upper and lower skirts 56 and 58. However, either skirt could be eliminated if desired. Additionally, while the passages could be formed to open upon the free end of the skirts (such that the connection between the skirt and the dome or top wall would have a series of arches in the skirt), it is preferred to form the passages fully within the skirt, as shown.

The reason for this preferred passage form is ease of assembly. Specifically, if the passages are formed fully in the skirt, the free edge of the skirt is a continuous circle. This permits the skirt to be secured to the dome or top wall by the use of inertia welding. Inertia welding provides advantages in both time and cost compared to traditional arc or laser welding.

Such inertia welding can be used to advantage to assemble much of the inflator of Fig. 1. For example, the top, bottom and side walls 12-16 would initially be formed in two pieces to provide access to the interior 18. In the embodiment shown, this is achieved by splitting the sidewall between the top and bottom walls, forming two concave bowl-shaped halves which may each be easily produced by forging, impact extrusion, drawing, etc. As shown, the lower half includes a mounting flange 62 extending radially outward from the upper edge thereof.

This lower half may first be combined with the shield wall, with the shield wall being secured to the inner face of the bottom wall by inertia welding. It is noted that in this embodiment the shield wall is offset from the longitudinal axis of the bottom wall. As such, the lower half of the housing would be rotated about an axis offset from longitudinal (and aligned with the mounting hole 40b) during this operation. Thereafter, the separation dome 20 could be secured to the inner face of the bottom wall using inertia welding. For this operation the rotation would be about the longitudinal axis of the bottom wall.

During attachment of the dome, the shield wall would rotate bodily about the longitudinal axis of the bottom wall with respect to the dome. Since this is not sufficient for inertia welding, the shield wall would not be secured to the dome 20 by this step. Therefore, in order to reduce friction and ensure proper connection of the dome and bottom wall, the length of the shield wall would be sized to be initially spaced from the inner face of the dome, although by a very small distance.

At this point the backstop may be attached. If the backstop contains only one skirt, that skirt is inertia welded to the appropriate component. Specifically, if only the lower skirt is provided, the lower skirt is inertia welded to the outer face of the separation dome. If only the upper skirt is provided, the upper skirt is inertia welded to the inner face of the top wall 12. Of course, if both skirts are provided, either operation may be used.

Thereafter, the halves of the sidewall may be joined together. Again, this may be accomplished using inertia welding. Additionally, if the backstop is provided with both the lower and upper skirts, as shown, this operation simultaneously inertia welds the unattached skirt to the dome 20 or top wall 12. With this operation, all inertia welds are complete. Additionally, it is possible to perform this step using an atmosphere of the pressurized inert gas. This will automatically provide the stored gas in the first chamber 26 upon completion of this step.

Thereafter, the upper edge of the shield wall is welded (i.e., conventional welded) or otherwise made gas-tight to the inner face of the dome 20. This may be achieved by accessing the second subchamber 34 via the mounting hole 40b. After the upper edge of the shield wall is secured to the dome, the heating material 42 may be inserted into the second subchamber via this same mounting hole. In order to simplify this step, the mounting hole for the second subchamber may be made larger than strictly required, and is preferably approximately the same size as the inner diameter of the shield wall, as shown.

It is noted that the heating material 42 for the first subchamber 32 would preferably be held within the dome 20 (typically by use of a thin metal bracket or cover plate) during the placement and inertial welding of the dome to the bottom wall. However, in the assembly operation described above, the bodily rotation of the shield wall about the longitudinal axis is also such bodily rotation with respect to the dome, prior to actually fixing the dome to the bottom wall. If the shield wall is moving within the dome, it may be seen that retaining the heating material within the dome would be quite difficult. To avoid this, the dome may be secured without the heating material, and the heating material introduced into the first subchamber via mounting hole 40a afterward.

As an alternative method of securing the shield wall and dome, it may be desirable to first secure the upper edge of the shield wall to the inner face of the dome via inertia welding. The location of the shield wall on the dome would be marked on the exterior of the dome, or otherwise noted. Thereafter the dome may be filled with the heating material, and secured to the bottom wall by the inertia welding. As before, the bodily rotation of the shield wall does not affect this step due to the spacing between the lower edge of the shield wall and the bottom wall.

During this inertia welding step, the final and fixed angular orientation of the dome with respect to the bottom wall is essentially impossible to determine beforehand. As such, the final position of the shield wall on the bottom wall can not be predetermined. For this reason, only after the dome is fixed to the bottom wall may the mounting hole 40b for the second subchamber be formed. In forming the hole 40b the marking made on the exterior of the dome may be employed. Thereafter the lower end of the shield wall is fixed to the bottom wall by convention welding techniques. Once sealed, the heating material is placed in the second subchamber via the hole 40b as before.

Furthermore, since the final position of the shield wall in this arrangement is not known, it is also risky to form the hole 40a for the first subchamber prior to inertia welding. Specifically, the hole 40a for the first subchamber could possibly be intersected by the shield wall, necessitating that the partially assembled inflator be scrapped. As such, it would be best to form this hole 40a after securing the dome.

While this may be done, there is the possibility that debris in the form of metallic chips would be left within the first subchamber during the drilling of the hole 40a. Such debris would pose a possible danger to the passenger if not filtered from the gas. To reduce this risk, it is possible to attach the dome without the heating material in the first subchamber, to thus permit easier cleaning of the subchamber after forming the hole 40a, and after such cleaning insert the heating material through the hole 40a.

Whichever method of shield wall attachment is used, at this time the initiator holders 38 are mounted into their respective mounting holes 40, and secured in place as by traditional welding steps. It is also possible to have already secured the holder 38 for the first subchamber in place prior to attachment of the dome, but only so long as the shield wall was fixed to the bottom wall, rather than the dome, to prevent collision of the shield wall and initiator. At this time the inflator 10 is complete, if the first chamber has received its charge of gas during the inertia welding. If not, the final step is to charge the first chamber with the inert gas. This may be achieved via an appropriate charge hole (not shown) in a manner known in the art.

From the above description it should be clear that the present invention provides a hybrid adaptive inflator which will provide reliable performance, may be used in a driver side application, and which may be easily assembled using mainly low cost inertia welding techniques. Furthermore, the inflator provides the ability to filter the heating gas, reducing the amount of particulate and thus producing a safer inflator. Finally, the use of either skirt 56 or 58, and especially using both skirts, for mounting of the backstop provides improved mixing of the gas.

This is due to the tortuous path that is forced upon the gas by the backstop and skirt(s). Specifically, the longitudinally flowing gas from the subchamber(s) must change direction 90° to flow radially outward over the filter and backstop. Since the passages 60 are located adjacent the lower end of the skirt, the gas must then change direction 90° to flow downward (reverse longitudinal flow), and then another 90° change to be forced through the passages 60 in the lower skirt. The gas must then change direction 90° again to flow axially upward toward the exit port 48, and then change direction 90° further to travel radially inward through the passages 60 in the upper skirt before reaching the exit port, where a final 90° direction change is required to flow axially from the inflator housing. A total of six 90° direction changes (540°) are thus required of the gas between the subchamber(s) and the exit port.

Additional tortuous flow can be achieved even after the gas leaves the exit port 48. Specifically, the inflator 10 may be provided with a diffuser 64. The diffuser includes a disk-shaped outer wall 66 spaced from the top wall 12 of the housing, and a cylindrical peripheral wall 68 extending downward from the outer wall. This peripheral wall has a diameter equal to, or less than, that of the top wall 12. As may be realized from the previous assembly discussion, the diffuser may be readily assembled to the outer face of the top wall 12 by the use of inertia welding.

The peripheral wall 68 of the diffuser includes a plurality of radial vents 70 extending therethrough. The gas flowing from the exit port 48 will thus impinge upon the outer wall 66 and be turned 90° to flow radially outward through the radial vents. In addition to enhancing tortuous flow, this also results in a safer thrust-neutral inflator. This tortuous flow throughout the inflator creates improved mixing of the heating gas and stored gas, ensuring greater pressures with lesser amounts of heating material.

As may be seen, the present inflator provides adaptive response in a hybrid form which is suitable for mounting in the driver side position, provides ease of assembly using a majority of inertia welds, and is efficient due to the creation of tortuous flow paths. As such, the present invention is believed to be an advantageous arrangement.

While providing advantages, the first embodiment also contains drawbacks, in that the shield wall must be sealed using conventional welding, rather than inertia welding, and that the welding location is difficult to access. Further, the need to fill the heating material after assembly of the subchamber is a drawback.

With reference to Fig. 2, a second embodiment of an inflator according to the present invention is shown, and is generally designated by reference numeral 72. This inflator is mainly identical to the first embodiment, and like elements are designated with like reference numerals.

The difference between the first and second embodiments is the form of the dome 20, and possibly the lower skirt 56 of the backstop 52. In particular, the edge wall 24 of the dome 20 is formed with a radially inward offset section 74 adjacent the upper wall 22. This offset section 74 results in the upper wall 22 having a diameter less than that of the lower skirt 56. The offset section also forms an upward facing shoulder 76 about the periphery of the dome, in opposed relation to the lower skirt.

The lower skirt 56 of the backstop may therefore be extended downward to abut against the shoulder 76. While this alone does not enhance performance, the increased length of the lower skirt permits the passages 60 to be moved downward also, preferably such that the entire passage is below the level of the upper wall 22. This arrangement further enhances the requirement that the gas flowing radially outward from the filter 54 must turn 90° downward (reverse longitudinal flow) and then 90° radially outward to exit the passages 60 in the lower skirt. As may be seen, this increases the mixing of the hot gas and the stored gas, increasing efficiency. Additionally, the passages in the lower skirt are much lower with respect to the side wall 16 compared to the first embodiment. Again, this increases mixing of the gases and efficiency by increasing the distance the hot gas must travel to the exit port.

In the embodiment shown in Fig. 2, the lower skirt itself does not extend fully to the shoulder, but rather a skirt extension 78 extends upward from the shoulder and abuts against the lower skirt, with the extension 78 containing the passages 60. Either arrangement is acceptable, even to the point of the extension rising all the way to the backstop, with no lower skirt present at all. Regardless of the particular arrangement used, inertia welding is still suitable for securing the lower skirt 56 to the shoulder 76 (or the lower skirt to the extension 78, or the extension 78 to the backstop 52).

The embodiment of Fig. 2 also differs in the details of the diffuser. In this embodiment, the diffuser peripheral wall 68 has a diameter slightly greater than that of the side wall 16, and extends downward over a portion of the side wall. As in the first embodiment, the peripheral wall includes a plurality of radial vents 70. The peripheral wall and side wall are fixed together, such as by laser welding. The lower end of the peripheral wall is flared outward to create the mounting flange 62.

As may be seen, the second embodiment provides improved mixing and efficiency compared to the first embodiment. However, the same drawbacks of the first embodiment are still present.

With reference to Fig. 3, a third embodiment of an inflator according to the present invention is shown, and is generally designated by reference numeral 80. The only difference in this third embodiment is the placement of the shield wall 30, which provides advantageous results for assembly.

In particular, in this embodiment the cylindrical shield wall is mounted coaxially with the longitudinal axis of the inflator. This mounting position has little or no effect on the operation of the inflator, and the operation is as described above for the first and second embodiments. The main difference achieved is in the assembly process.

During assembly, the shield wall 30 may be mounted to the bottom wall using inertia welding. In this embodiment, however, the bottom wall is rotated about its own longitudinal axis, which makes this inertia welding step simpler. Furthermore, during the next step of inertia welding the dome to the bottom wall, the upper edge of the shield wall may be secured to the dome simultaneously using inertia welding. This is of course because the shield wall is now mounted coaxially with the dome.

Since this operation permits the shield wall to be secured at both ends, the heating material 42 may be placed in both the first and second subchambers prior to inertia welding the dome to the bottom wall. This is of course simpler than in the previous embodiments, and reduces assembly time even further. However, it may be possible to reduce the time for this operation yet more.

Specifically, the shield wall could be inertial welded to the dome, rather than the bottom wall, before the dome is secured to the bottom wall. After such a step, the heating material could be placed within the dome, both inside and outside of the shield wall. This arrangement could thus possibly reduce the assembly steps compared to placing heating material in both the dome in the upper half and the shield wall in the lower half.

While this embodiment improves assembly by eliminating the traditional (e.g., arc or laser) welding to fully secure the shield wall, the need to determine the location for the holes 40, and the need to insert the heating material through a mounting hole 40, there are drawbacks. For example, the placement of the shield wall on the longitudinal axis results in less space for the initiators 36, compared to the previous embodiments. In other words, while the previous embodiments had the entire diameter of the dome across which to space the initiators, this third embodiment only has the radius of the dome. As such, smaller initiators may be required for this embodiment.

A second drawback is the initiator for the first subchamber 32 being offset with respect to the longitudinal axis of the dome. As in previous embodiments, the initiator would rotate bodily with respect to the dome, precluding the placement of the heating material within the dome prior to assembly. Simply waiting to mount the initiator until after the dome and enclosed heating material is assembled could be an option. However, since the final angular orientation of the dome is not known beforehand, any covering to enclose the open end of the dome (to retain the heating material) would likely block insertion of the initiator. As such, the heating material may have to be inserted into the first subchamber via the mounting hole 40a.

Another possible drawback is the need for precision when inertia welding the lower skirt 56 to the extension 78. This drawback could be avoided, however, by eliminating the extension 78, and extending the lower skirt the entire distance to the shoulder 76.

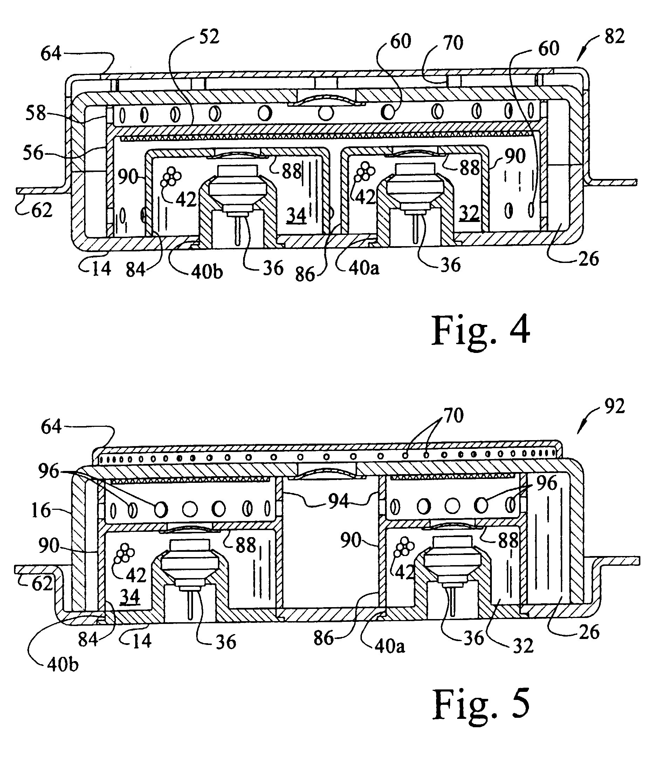

A fourth embodiment of the present invention is shown in Fig. 4, and is designated generally by reference numeral 82. This embodiment is believed to overcome the conventional welding drawback of the first two embodiments, and the limited initiator space drawback of the third embodiment, while providing yet further improved mixing of gasses.

Specifically, this embodiment does not employ a separation dome 20 which is divided to form the subchambers. Rather, each of the subchambers 32 and 34 of this embodiment is defined within discrete first and second cups 84 and 86, respectively. The cups each include a circular end wall 88 spaced from the bottom wall 14 of the housing, and a cylindrical edge wall 90 extending from the periphery of the end wall 88 to the bottom wall 14. As may be envisioned, each of the cups may be readily attached to the bottom wall by inertia welding.

This embodiment also includes the backstop 52 with filter(s) 54. As before, one or both of the skirts 56 and 58 are necessary to hold the backstop in position, and both are again preferred. The upper skirt 58 is similar to previous embodiments, and may be readily secured to the inner face of the top wall 12 of the housing using inertia welding. However, since the upper walls of the dome provide a discontinuous surface compared to the unitary dome 20, the lower skirt 56 can not be secured to the end walls 88 by inertia welding.

While the lower skirt could be eliminated, its use is preferred for its creation of tortuous gas flow. As such, to simplify mounting of the lower skirt it is preferred that the lower skirt has a diameter greater than the extent of the cups 84 and 86. In this manner, the skirt may extend below the level of the cup end walls 88 and encompass both cups. This will permit a full circular end at the bottom of the lower skirt, suitable for inertia welding to the bottom wall 14 of the housing, as shown. Furthermore, since the lower skirt extends all the way to the bottom wall, the passages 60 through the lower skirt may be placed even lower, increasing the distance the hot gas travels to exit the inflator.

In addition to the increase in efficiency due to this increased gas flow distance, this fourth embodiment is perhaps the simplest and lowest cost to assemble. First, both cups may not only be inertia welded to the bottom wall, but this may be done with the heating material already within the cups, eliminating the need to insert the material 42 through the mounting holes 40. Furthermore, the positions of these mounting holes are known from the start, and may be formed prior to mounting the cups, to eliminate the possibility of debris in the subchambers.

The upper or lower skirt may then be secured to the top wall or bottom wall, respectively. Again, this is achieved using inertia welding. Thereafter, the two halves of the housing are inertia welded together, simultaneously inertia welding the remaining one of the upper or lower skirt. Pressurization of the first chamber, if not done in the previous step, then completes the assembly. With this arrangement, the assembly is almost entirely effected using inertia welding, as in the third embodiment, yet the drawbacks of small initiator space and heating material filling are eliminated. Furthermore, an improvement in efficiency is achieved via the lowering of the passages in the lower skirt.

It is noted that a backstop having an increased diameter, such that the lower skirt may extend to the bottom wall of the housing, is a modification available on the first three embodiments also. A further modification is to eliminate the passages 60 in the lower skirt, and simply have the bottom, free, end of the lower skirt be spaced from the bottom wall by a small amount. This spacing would then form a single passage about the entire periphery. This would not provide as secure a mounting for the lower skirt, however it may be sufficiently secure, and would eliminate the cost of forming the multiple passages through the lower skirt.

Since this fourth embodiment provides the greatest ease and cost savings during assembly, and the greatest efficiency, it is the preferred arrangement for the hybrid adaptive inflator.

For completeness, a fifth, though lesser preferred, embodiment of the present invention is shown in Fig. 5, and is generally designated by reference numeral 92.

This embodiment is generally similar to previous embodiments. A first difference is the housing construction. In this embodiment the top and side wall 12 and 16 are formed as a monolithic unit. The bottom wall further includes an extension to form the mounting flange 62. This arrangement is similar to that used for pyrotechnic driver side inflators produced by the applicant, and could also be used with any of the preceding embodiments.

As in the previous embodiment, two cups 84 and 86 are again employed to retain the heating material and initiators. However, the backstop is eliminated. Instead, the filter(s) 54 are mounted directly upon the inner face of the top wall 12. To ensure that the gas from the subchambers impinges upon the filter(s), each of the cups includes an edge wall extension skirt 94 rising from the edge wall 90 towards the top wall 12. As may be envisioned, the extension skirts 94 will force the gas to travel upward toward the filter(s) before undue radial expansion.

As shown, the extension skirts 94 extend fully to the top wall, and are sealed thereagainst. This requires that two separate filters 54 be employed, as shown. The sealing against the top wall also requires that the extension skirts 94 be provided with passages 96 to permit the gas to exit from the interior of the extension skirts. These passages are located low upon the extension skirt so that the hot gas will first impinge upon the filter(s), and then flow downward to the passages, to ensure filtering and improve mixing.

This arrangement provides drawbacks similar to previous embodiments. Specifically, the cups can not be inertia welded to the bottom wall first, since assembly of the top wall 12 would block access to the top end of the extension skirt, and it could not be secured to the top wall. Additionally, the filters 54 would interfere with the extension skirts if the top wall were attempted to be secured using inertia welding.

As such, the arrangement shown must have the extension skirts secured to the top wall first. This may be achieved by inertia welding,which is desirable. However, the offset of the cups from the longitudinal axis (even if only one cup were offset by using a placement as in Fig. 3) prevents inertia welding of the cups to the bottom wall simultaneously with assembly of the housing. It is therefore necessary to weld at least one of the cups to the bottom wall conventionally, and through the initiator mounting holes 40a and b.

The locations of the mounting holes, however, can not be determined until after inertia welding the housing, since the cups are mounted to the top wall via the extension skirts, and will rotate with respect to the bottom wall during the inertia welding. It is therefore necessary to form the mounting holes 40 after assembly of the housing, and by use of markings indicating the internal positions of the cups.

Again, forming the holes at this time increases the risk of debris in the subchambers, and as such it is preferred to have the subchambers empty for cleaning. This in turn necessitates the additional step of inserting the heating material after the cleaning. Thereafter, the initiators may be mounted and the first chamber pressurized.

As may be seen, this arrangement has many of the disadvantages of the previous embodiments. Beyond this, the efficiency is less than previous embodiments, as the gas flow does not induce as much mixing. Specifically, the hot gas flows up to the filter, down to the passages 96, radially outward, and then up through the exit port. While there is a full 360° of direction changes, the placement of the voids above the cups results in a reduced distance the gas must travel, reducing mixing compared to at least the second thorough fourth embodiments.

The mixing may be more than sufficient, however, to provide acceptable efficiency. As such, a more convenient assembly arrangement is desirable, and possible. Specifically, the assembly difficulties noted above stem from the attachment of both the cups and the extension skirt to the bottom and top walls, respectively. Eliminating one of these attachments greatly simplifies assembly. Since the cup must be attached to the bottom wall to ensure proper firing of the heating material and pressure buildup, and other reasons discussed below, a preferred modification of this fifth embodiment eliminates the attachment between the edge wall extension skirts 94 and the top wall.

With this modification, the extension skirts are formed with a length such that they will be close to, but not contact the top wall. This spacing will also include the thickness of the filter, to eliminate contact there also. For reasons discussed below, the filter in this modification is preferably a single sheet covering the top wall, rather than two individual filters.

These cups may be secured to the bottom wall using inertia welding. Since the locations of the cups are known, the initiator mounting holes 40 to be formed beforehand, eliminating any debris problems. Further, the heating material may be in place in the cups prior to inertia welding, eliminating the need to insert the material through the holes. Thereafter, the top wall 12 (with filter 54 attached) is secured to the bottom wall 14 (via the side wall 16). Since the upper end of the extension skirts 94 are spaced from the top wall and filter, the filter will not be damaged. Simply mounting the initiators (if not done prior to mounting the cups) and pressurization of the first chamber (if not done before) completes the assembly.

As is apparent, this modification results in the upper end of the extension skirts being spaced from the filter. This spacing, however, may be kept relatively small, such that only a small percentage of the hot gas flow therethrough, and the majority flows down and out through the passages 96. That gas which does flow through the spacing will likely have impinged against the filter within the periphery of the extension skirt 94. If not, however, the use of a single large filter ensures that this gas passes along the filter during its flow through the spacing.

As such, the modification of the fifth embodiment greatly increases the ease of assembly, to a point similar to that of the preferred fourth embodiment. The efficiency is reduced compared to the fourth embodiment due to reduced mixing. However, as noted, this still may be sufficiently efficient. Furthermore, this embodiment would likely have reduced material and production costs compared to the fourth embodiment, due to the reduced number of parts. As such, while not preferred over the fourth embodiment, the modified fifth embodiment has appreciable merit.

From the foregoing it will be seen that this invention is one well adapted to attain all ends and objects hereinabove set forth together with the other advantages which are obvious and which are inherent to the structure.

It will be understood that certain features and subcombinations are of utility and may be employed without reference to other features and subcombinations. This is contemplated by and is within the scope of the claims.

Since many possible embodiments may be made of the invention without departing from the scope thereof, it is to be understood that all matter herein set forth or shown in the accompanying drawings is to be interpreted as illustrative, and not in a limiting sense.

## Claims

1. An adaptive airbag inflator (10), comprising:
a housing defining an interior (18), an exit port (48) in said housing, said exit port (48) accessing said interior (18), said interior (18) being divided into a first chamber (26) and first and second subchambers (32, 34), each of said subchambers (32, 34) having a vent port (44) for directing heating gas from said subchambers (32, 34) in a longitudinal direction;
a pressurised gas stored in said first chamber (26);
a heating material (42) stored in each of said first and second subchambers (32, 34) to create said heating gas;
a gas impermeable member (52) mounted in longitudinally spaced, opposed relation to said vent ports (44) to thereby force radial flow of said heating gas;
a skirt (56) having an upper end at least in proximity to said gas impermeable member (52), and a lower end extending toward said vent port (44), said skirt (56) having a periphery encompassing at least one of said vent ports (44) top thereby block at least a substantial portion of said radial flow, and force reverse longitudinal flow of said heating gas subsequent to impingement upon said gas impermeable member (52).

2. An inflator according to claim 1, wherein said skirt periphery is spaced from said housing, and said exit port (48) is longitudinally spaced from said lower end of said skirt (56) to thereby force longitudinal flow of said gas between said skirt (56) and said housing subsequent to exiting said skirt (56).

3. An inflator according to claim 2 wherein said skirt (56) includes a plurality of passages (60) therethrough adjacent said lower end.

4. An inflator according to any preceding claim wherein said gas impermeable member (52) is a backstop positioned longitudinally intermediate said exit port (48) and said vent ports (44), and said skirt (56) extends from said backstop.

5. An inflator according to any preceding claim wherein said skirt comprises a lower skirt (56), and further comprises an upper skirt (58) extending from said gas impermeable member (52) toward said exit port (48), said upper skirt (58) including a plurality of passages (60) therethrough.

6. An inflator according to any preceding claim, wherein said skirt extends to said housing to thereby encompass said vent ports.

7. An inflator according to any preceding claim further including a separation dome (20) mounted in said housing, said first chamber (26) being exterior of said dome (20), and a shield wall (30) within said dome (20) and extending between said dome (20) and said housing, the volume within said dome (20) and exterior of said shield wall (30) defining said first subchamber (32), and the volume within said shield wall (30) defining said second subchamber (34).

8. An inflator according to claim 7 wherein said dome (20) includes an upwardly facing shoulder (76), and a dome extension (78) extending upward from said shoulder (76), said dome extension (78) abutting said lower end of said skirt (56), and further including a plurality of passages (60) extending through said dome extension (78).

9. An inflator according to claim 7 or 8 wherein said dome (20) and said shield wall (30) include circular peripheries, and said shield wall (30) is coaxial with said dome (20).

10. An inflator according to any one of claims 1 to 6 wherein said first and second subchambers (32, 34) are defined by first and second cups (84, 86) respectively, fixed to said housing at discrete locations.

11. An inflator according to claim 10 wherein said housing includes a circular top wall (12), a circular bottom wall (14) spaced from said top wall (12), and a cylindrical side wall (16) extending between peripheral edges of said top and bottom walls (12, 14), said walls being sized for placement upon a steering wheel of a vehicle, and wherein said exit port (48) is located in said top wall (12), and said cups (84, 86) and said lower end of said skirt (56) are mounted to said bottom wall (14).

12. An inflator according to claim 10 or 11 wherein each of said cups (84, 86) includes one of said skirts (94) extending from an associated one of said cups (84, 86) toward said top wall (12), and further comprising a plurality of passages (96) extending through said skirts (94) adjacent said cups (84, 86).
